# EUROPÄISCHE PATENTSCHRIFT

(11) **EP 2 309 626 B1**
(45) Veröffentlichungstag und Bekanntmachung des Hinweises auf die Patenterteilung: **03.10.2012**
(21) Anmeldenummer: 09012858.8
(22) Anmeldetag: 12.10.2009
(51) Int. Cl.: H02K 15/095, H01F 5/04, H01F 41/06

(54) **Wickelverfahren, insbesondere zur Ausbildung von elektrischen Spulen**
Coiling method, in particular to form electrical coils
Procédé de bobinage, notamment pour enrouler de bobines électriques

(43) Veröffentlichungstag der Anmeldung: 13.04.2011
(73) Patentinhaber: Aumann GMBH, 32339 Espelkamp (DE)
(72) Erfinder: Lüttge, Wolfgang, 31787 Hameln (DE)
(74) Vertreter: Schober, Mirko

(56) Entgegenhaltungen:
- JP-A- 1 311 853
- JP-A- 2003 061 320
- JP-A- 2004 274 850
- JP-A- 2004 343 951

## Beschreibung

Die Erfindung betrifft ein Verfahren nach dem Oberbegriff des Anspruchs 1 sowie eine Vorrichtung nach dem Oberbegriff des Anspruchs 7. Ein entsprechendes Verfahren dient zum geordneten windungsweisen Aufwickeln von strangförmigem Gut auf einem Trägerkörper mit nicht kreisrundem Querschnitt, bezogen auf die Wickelachse, und insbesondere das Erzielen einer konturkonformen Endlage des strangförmigen Guts auf dem Trägerkörper sowie die Einrichtung hierzu.

Strangförmiges Gut im Sinne dieser Erfindung (im Weiteren auch als Wickelgut bezeichnet) umfasst draht-, litzen-, filament-, seil- oder faserförmige Materialien, insbesondere aus elektrisch leitfähigen Werkstoffen, mit einem über die Länge gleichbleibenden Querschnitt und der Eigenschaft, flexibel zu sein aber auch plastische und/oder elastische Verformungen aufzunehmen. Dieses Wickelgut ist in der Regel mit einer elektrisch isolierenden Umhüllung versehen. Entsprechende Materialien lassen sich auf dem Trägerkörper durch Relativbewegung zwischen diesem und dem Zuführmittel des Strangguts windungsweise zu Spulen ausbilden.

Als Beispiel für das strangförmige Gut sei hier Kupferlackdraht genannt, welcher sowohl als Runddraht oder als Flachdraht vorliegen kann. Trägerkörper mit nicht kreisrundem Querschnitt sindbeispielweise die Polzähne lamellierter Blechpakete von Elektromotoren. Auf ihnen sind zur Funktionserfüllung des Elektromotors bestrombare Spulen aufzubringen. Dazu steht zwischen zwei benachbarten Polzähnen, die sich von einem als Joch bezeichneten Kreisring radial nach innen oder außen erstrecken, nur ein begrenzt nutzbarer Raum zur Verfügung, welcher oftmals über eine nur eingeschränkte Zugänglichkeit verfügt. Dieser Raum soll bestmöglich ausgenutzt werden.

Einer solchen maximalen Wickelraum-Ausnutzung für stromleitende Leiterquerschnitte (der Maximierung des Füllfaktors) sind Grenzen gesetzt. Dies ergibt sich einerseits aus der Geometrie des strangförmigen Wickelguts, bei der sich sog. Zwickel-Leerräume zwischen Runddrähten nicht vermeiden lassen. Andererseits werden durch das verwendete Wickelverfahren Grenzen gesetzt, wenn ein Draht nicht konturkonform entlang der Mantellinie eines Trägerkörpers, also zum Beispiel eines Polzahns, verlegt wird.

Unter "konturkonform"wird die durchgängig tangentiale Anlage des Wickelguts an der zu bewickelnden Oberfläche des Trägerkörpers, bezogen auf die Umfangsstrecke einer Windung zwischen zwei als Biegestellen wirkenden Eckpunkten des Querschnitts, dies betrachtet für die erste Lage einer Spule, verstanden. Für alle weiteren Lagen einer so begonnenen Spule gilt die durchgängig tangentiale Lage des Wickelguts an den konturkonform verlegten Windungen der vorherigen Lage als konturkonform. Die konturkonforme Verlegung wird durch Werkstoffeigenschaften des Wickelguts beeinflusst und insbesondere erschwert, weil sich das Material des Wickelgutes durch plastische oder elastische Reaktionen einer durch den Biegevorgang beim Wickeln hervorgerufenen Formänderung widersetzt. Während ein kreisrunder Querschnitt des Trägerkörpers eine kontinuierliche, gleichbleibende Biegebeanspruchung des Wickelgutes ergibt, für die die anzulegende Zugkraft optimiert werden kann, ergibt ein zum Beispiel rechteckiger Querschnitt mit einem Verhältnis Länge/Breite » 1, wie er z. B. für Zahnpole typisch ist, eine sich impulsartig erhöhende Biegebeanspruchung an den Umlenkstellen der vier Ecken und ein nachfolgend fast lastloses Ablegen des Drahtes auf der anschließenden Seite des Trägerkörpers. Dies ermöglicht dem Draht ein Zurückfedern, was dannzu einer Ausbauchung der Wicklung gegenüber dem Trägerkörper führt. Der dadurch entstehende Distanzraum zwischen Wicklung und Trägerkörper geht für die Nutzbelegung mit Leiterquerschnitt verloren. Wird statt eines Rundkupferlackdrahtes etwa ein Flachdraht verwendet, so kompliziert das die Bedingungen des Übergangs des Drahtes aus einer Drahtdüse oder Führungsrolle auf den Trägerkörper zusätzlich. Der Begriff "Ausbauchung", auch mit "Bauchigkeit" bezeichnet, beschreibt einen Verlegezustand des Wickelguts auf dem Trägerkörper, bei der eine Windung oder aber alle im selben Abschnitt zwischen zwei Biege-Umlenkkanten verlegten Windungen nicht die konturkonforme Anlage eingenommen haben. Die Ausbauchung oder Bauchigkeit ist die Distanz zwischen Trägerkörper-Oberfläche und der ihr nächstliegenden Windung, gemessen an der Mitte der Strecke zwischen zwei benachbarten Biege-Umlenkkanten. Die Größe der Bauchigkeit hängt ab vom Drahtdurchmesser, der anliegenden Zugkraft und der Länge zwischen den Biege-Umlenkpunkten.

Ein weiteres Hemmnis für eine konturkonforme Wickelgutverlegung stellt die durch die Geometrie des Produkts gegebene Zugänglichkeit des Trägerkörpers für das Wickelgut verlegende Einrichtung dar. Dies gilt insbesondere dann, wenn diese Trägerkörper, um beim Beispiel Zahnpole zu bleiben, als Zahnpolverbund vorliegen. Die Zugänglichkeit des Wickelraums schränkt den Freiheitsgrad ein, die das Wickelgut ausgebende Einrichtung optimal in Bezug auf Distanz, Richtung und Leiteinwirkung bezüglich des Verlegepunkts auf der Trägerkörper-Oberfläche einzustellen. Den Gegebenheiten der Zugänglichkeit muss die das Wickelgut ausgebende Einrichtung angepasst werden. Bewährt haben sich hierfür zum Beispiel röhrenförmige Düsen, die im Wickelraum operieren können und dabei eine lineare Relativbewegung in Bezug auf den Trägerkörper ausführen, während eine komplettierende Schwenkbewegung vom Trägerkörper selbst realisiert wird.

Im Stand der Technik existieren Lösungen, um die packungsdichte Verlegung des strangförmigen Wickelgutes, hier insbesondere Wickeldraht, und eine möglichst maximale Ausnutzung des theoretisch verfügbaren Wickelraumes zwischen benachbarten Flanken zweier Trägerkörper, wie es Zahnpole von Statoren für Elektromotoren sind, zu erreichen. Dabei ergibt sich zugleich die zusätzliche Bedingung, dass sich die dadurch einander nähernden Spulenseiten in einem solchen Wickelraum fast parallelflankig einstellenwobei dies mit einer Welligkeit ihrer Umgrenzungskontur geschieht, die zum Beispiel dem halben Durchmesser eines runden Wickeldrahtes entsprechen kann. Eine Bauchigkeit, wie sie sich beim Wickeln der Spule an deren Längsseiten ergeben kann, ist dieser Zielstellung abträglich.

Unter den Lösungsvorschlägen nimmt die orthozyklische Verlegung der Windungslagen einer solchen Spule wegen des erreichbar hohen Füllfaktors eine besondere Stellung ein. Orthozyklische Wicklung bedeutet, dass man die Windungen einer Runddrahtspule nicht schraubenförmig fortschreitend über der Mantelfläche des Trägerkörpers ausbildet; durch das schraubenförmige Ausbilden ergeben sich nämlich an den Flanken begrenzender Flansche größere Zwickelräume, mehr noch aber führt die gegensinnige Schraubung zwischen aufeinanderfolgenden Lagen letztlich zu einer Verstürzung einzelner Windungen, was das angestrebte Dicht-an-Dicht-Wickeln der Windungen abbrechen lässt und zu einem sog. wilden Lagenaufbau mit Packungsdichte-Verlusten führt. Die orthozyklische Wicklung verlegt die Windungen stattdessen unter einem Winkel von 0° zur Drehachse eines beispielsweise zylindrischen Trägerkörpers und lenkt vor Vollzug der vollen Windung innerhalb einer kurzen Umfangsstrecke den Draht um den Betrag seines Durchmessers aus.

In DE 10 2007 037 611 B3 wird vorgeschlagen, die Sprungstelle im Windungsumlauf einer orthozyklischen Spule an eine schmale Stirnseite des Polzahns zu verlegen, weil sie hier am wenigsten die relative Ebenheit der sich gegenüberstehenden Längsflächen benachbarter Polspulen stört. Um den Windungssprung auf der Schmalseite sicher ausführen zu können und einen sicheren Übergang auf die anschließende Längsseite zu erreichen, gibt man dem aufgesetzten Trägerkörper eine Sonderkontur. Diese besteht darin, eine der beiden Längsseiten der Kontur länger auszuführen, womit sich an der betreffenden nun schrägen Stirnseite eine längere, für die Ausführung des Sprunges nutzbare Verlegestrecke ergibt. Zusätzlich ergibt sich an der etwa 60° spitzen Ecke ein vorteilhafter Fixiereffekt des dort umgelenkten Drahtes. Nachteilig ist die Inkaufnahme einer axialen Verlängerung des Trägerkörpers über das funktionsmäßig notwendige Mindestmaß für den Stator des Motors hinaus.

In DE 10 2007 002 276 A1 ist ebenfalls die Zielsetzung, den vorhandenen Wickelraum einer Polzahnspule bestmöglich auszunutzen und hierzu auch an den Spulenlängsseiten etwaige Ausladungen einzelner Windungen oder Windungskreuzungen zu vermeiden, indem die orthozyklische Wicklung angewendet wird, modifiziert für den Fall einer ungeraden Lagenzahl und der Vorgabe, beide Spulenenden auf derselben Flanschseite zu platzieren. Hierzu erfolgt eine Spreizung des Windungs- und des lagenweisen Wicklungssprunges an den Längsseiten. So wird für die gespreizten Windungen der letzten Lage eine Einbettung mit Verlagerung der aufbauenden Kreuzung in die weniger kritischen Stirnseiten geschaffen.

In EP 1 315 268 A1 ist eine nach vorheriger Wickeltechnik mit Ausbauchung an den Längsseiten auf einem Polzahn gewickelte Spule beschrieben. Zur Vermeidung einer unerwünschten Ausbauchung ist eine komplizierte Wickeleinheit vorgeschlagen, mit der die aus starkem Runddraht bestehenden Spulen - wie sie insbesondere für Erzeugnisse im Kfz-Bereich wegen der dortigen Bordnetz-Kleinspannung erforderlich werden - separat vorgewickelt werden, was unter zyklischer Aktivierung radial zustellbarer Biegestößel udgl. vonstatten geht. Dies ist nur möglich, weil man die Zugänglichkeit durch das Separathalten des Wickelwerkzeugs erreicht. Man nimmt auch hier in Kauf, die aufgesetzten Polspulen nicht im schaltungsmäßigen Verbund gesamter Stränge wickeln zu können.

Aufgabe der Erfindung ist es, ein Wickelverfahren und eine entsprechende Vorrichtung zum konturkonformen Verlegen von strangförmigem Gut auf nicht kreisrunden Trägerkörpern zur Verfügung zu stellen, bei denen die erwähnten Nachteile nicht auftreten und insbesondere die Bauchigkeit des aufgewickelten Wickelgutes minimiert wird.

Die Aufgabe wird durch ein Verfahren gemäß Anspruch 1 sowie eine Vorrichtung gemäß Anspruch 7 gelöst. Erfindungsgemäß ist vorgesehen, dass das zur Spulenbildung auf einem nicht kreisrunden Trägerkörper verlegte strangförmige Wickelgut, zum Beispiel ein Kupferlackdraht, seine Windungsgestalt unter axialer Zugkraft nicht allein durch resultierende Biegung am tangentialen Auftreffpunkt der Trägerkörper-Mantellinie annimmt, sondern dass das strangförmige Wickelgut bereits im Abschnitt zwischen diesem Auftreffpunkt und der Auslassstelle der Wickelgut-Zuführeinrichtung einer definierten Querkraft ausgesetzt wird. Diese Querkraft übt auf das Wickelgut im genannten Bereich eine elastisch bis plastische Vorbeanspruchung aus und beeinflusst so das Verhalten des Wickelgutes beim Auftreffen auf den Trägerkörper und bei der fortschreitenden Windungsausbildung nachhaltig. Die definierte Querkraft kompensiert ganz oder ausreichend teilweise das Bestreben des verlegten Drahtes, zwischen Biegepunkten an den Ecken einer im Querschnitt polygonen oder nicht kreisrunden Trägerkörperkontur eine Ausbauchung zu bilden, statt konturkonform satt anzuliegen.

Die erfindungsgemäße Querkraft des Wickelverfahrens ist so gerichtet, dass sie den freien Abschnitt des strangförmigen Wickelgutes zwischen Auftreffpunkt und Auslassstelle in zwei zueinander unter einem Winkel stehende Abschnitte auslenkt.

Die erfindungsgemäße Querkraft des Verfahrens wirkt während einer Windung nicht ständig auf das strangförmige Wickelgut ein, sondern sie wird zyklisch aktiviert mit Bezug auf den Konturbereich der Trägerkörper-Mantellinie, den der an dieser wandernde Auftreffpunkt momentan durchläuft. Es gilt vor allem, die Ausbauchung an den Längsseiten der Spule zu verhindern, weil diese Längsseiten sich paarweise in dem durch die Längsseiten zweier benachbarter Trägerkörpers gebildeten Wickelraum unmittelbar gegenüberstehen. Die Zielstellung einer konturkonformen Windungsverlegung gilt damit insbesondere für diesen Teil einer Windung. Eine verbleibende Ausbauchung an den Stirnseiten des Trägerkörpers bzw. der Spule kann dagegen zugelassen werden. Der Angriffpunkt und die Richtung der Querkraft wechselt bei einem Windungsumlauf in Abhängigkeit von der relativen Stellung der Auslassstelle der Zuführeinrichtung bezogen auf den Trägerkörper.

Trägerkörperoberfläche der erfindungsgemäß konturkonformen Windungsverlegung ist nicht nur die vor Beginn der Bewicklung vorhandene Bauteiloberfläche, sondern nach Fortschreiten der Bewicklung auch die dabei ausgebildete Hüllkontur über die Reihung der nebeneinander in zum Beispiel einer Lage liegenden Windungen des strangförmigen Wickelgutes, die parallel zur Bauteiloberfläche mit der Wellung eines halben Strangdurchmessers entsteht. Sie wird im Folgenden mit dem Begriff der momentanen oder zu bewickelnden Trägerkörperoberfläche bezeichnet. Die durch die Radien benachbarter Stränge entstehende Rillung kann dabei schraubenförmig über die Verlegefläche verlaufen oder aber bei einer sog. orthogonalen Wicklung über etwa 60% des Trägerkörperumfangs senkrecht zur Trägerkörperachse gerichtet sein. Die orthogonale Wicklung kommt dem erfindungsgemäßen Verfahrensprinzip mit seinem Ziel einer konturkonformen Verlegung begünstigend entgegen.

Die verfahrensgemäße Lösung wird durch eine Vorrichtung realisiert, die sich eines an den Wickelgutstrang anlegbaren Vorformelements bedient, um die Querkraft aufzubringen. Das Vorformelement, bei dem es sich zum Beispiel um einen Stab beliebigen Querschnitts oder ein Röhrchen handelt, ist parallel zur Längsachse der als Zuführeinrichtung dienenden Auslassdüse für das strangförmige Wickelgut beweglich angeordnet, um so in erfindungsgemäßen Eingriff mit dem Wickelgutstrang gebracht werden zu können. Die bevorzugt als zylindrische Düse ausgebildete Zuführeinrichtung und das zugeordnete Vorformelement bilden eine Einheit. Abhängig vom angewendeten Wickelprinzip bzw. der Relativbewegung zwischen Zuführeinrichtung und Trägerkörper ist die Vorformelement-Bestückung in dieser Einheit vorzunehmen. Beim Hub-Schwenk-Verfahren der Nadelwickeltechnik umläuft die Einheit den Trägerkörper nach Paternoster-Art. Dagegen umläuft die Einheit beim Rotationswickel-Verfahren, der Flyerwickeltechnik, den Trägerkörper mit einer stets radial gerichteten Orientierung, so dass hier in der Einheit zwei Vorformelemente vorgesehen sind, damit die Querkraft erfindungsgemäß ausgeübt werden kann. Vorteilhaft weist das Vorformelement zur Anpassung an die jeweilige Wickelaufgabe ein mit einem Aktuator versehenes Basisteil und ein auswechselbares Kopfteil zur Anlage an den WickelgutStrang und erfindungsgemäßer Auslenkung desselben auf. Im Basisteil kann die formschlüssige Halterung zylindrisch sein, so dass das hier eingefügte Kopfteil gedreht werden kann, bevor es fixiert wird.

Ist als Zuführeinrichtung einer Auslassdüse vorgesehen, kann diese für Zusatzfunktionen um 90° geschwenkt werden, was gemeinsam mit oder unabhängig von den beiden Vorformelementen erfolgt. Diese Zusatzfunktion kann auch genutzt werden, um die Trennung des Wickelgutstranges durch ein Trenn-Element so auszuführen, dass es dabei nicht zu einer örtlichen Ausbauchung des letzten Windungsabschnittes kommt.

In diesem Zusammenhang wird darauf hingewiesen, dass die in der Beschreibung und den Ansprüchen von Merkmalen verwendeten Begriffe "umfassen", aufweisen", "beinhalten", "enthalten", "zum Beispiel" und "insbesondere" sowie deren grammatikalische Abwandlungen, generell eine nicht abschließende Aufzählung von Merkmalen, wie z.B. Verfahrensschritte, Einrichtungen, Bereichen, Größen und dergleichen bezeichnen, in keiner Weise das Vorhandensein anderer oder zusätzlicher Merkmale oder Gruppierungen von anderen oder zusätzlichen Merkmalen ausschließt.

Die Erfindung wird unter Bezugnahme auf die beigefügten Zeichnungen, in denen Ausführungsformen beispielhaft dargestellt sind, näher beschrieben. Dabei zeigt :
- Figur 1 -: eine Gruppe nicht kreisrunder Trägerkörper, de- ren jeder eine Spule mit Ausbauchung an den sich gegenüberstehenden Flankenseiten trägt, wie es Stand der Technik ist,
- Figur 2A -: die prinzipielle erfindungsgemäße Lösung,
- Figur 2B -: eine Variante als Ausgestaltung der Fig. 2A,
- Figur 2C -: eine Variante der Fig. 2B mit zwei Betriebszu-
- Figur 2D -: ständen der erfindungsgemäßen Vorformelemente, eine Variante der Fig. 2B mit der Darstellung der Betriebszustände der erfindungsgemäßen Vor- formelemente bei einer Windung,
- Figuren 3A u.3B -: in Varianten eine Gruppe nicht kreisrunder Trä- gerkörper, deren jeder eine Spule aus erfin- dungsgemäß konturkonformen Windungen trägt.

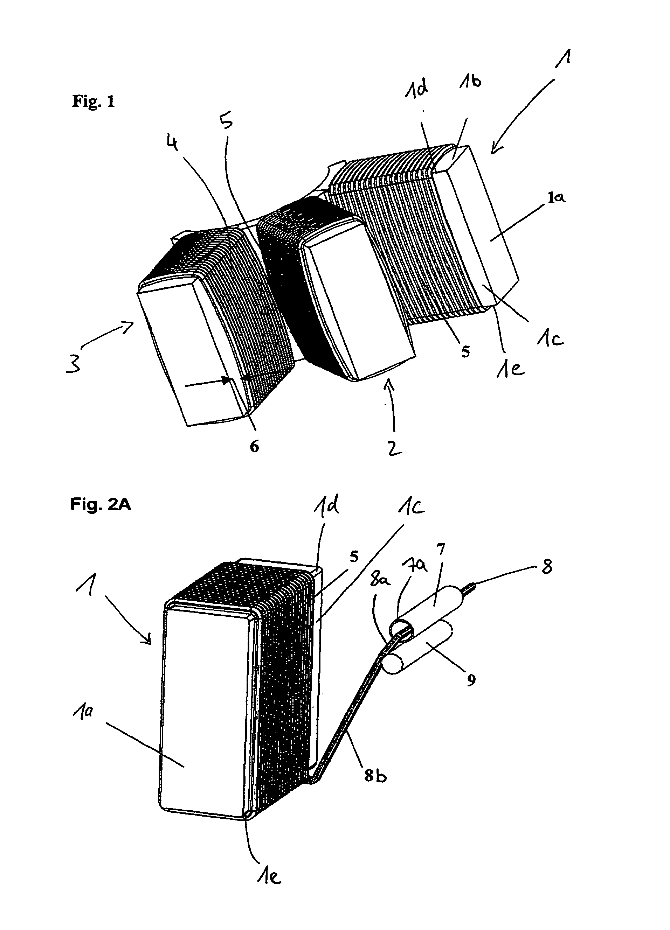

In Figur 1 ist der Stand der Technik gezeigt. Dort haben drei Trägerkörper 1, 2, 3 eine rechteckige Stirnseite 1a, deren Umfangslinie die für die Windungsausbildung entscheidende Kontur ist, die sich aus den Längen 1c und Breiten 1b zusammensetzt und Biegekanten 1d, 1e einschließt. Die Spule 5 hat insbesondere an den Flankenseiten 1c eine Ausbauchung 6, das Wickelgut ist dort von der Fläche der Flankenseite 1c beabstandet. Aufgrund der Ausbauchung 6 nähern sich die benachbarten Spulen 4, 5 in unerwünschter Weise, was die angestrebte Erstreckung der Windungen über der verfügbaren Gesamtlänge des Trägerkörpers 1, 2, 3 entlang der Kante 1d einschränkt.

In Figur 2A ist das Prinzip der erfindungsgemäßen Lösung zur Vermeidung der unerwünschten Bauchigkeit gezeigt. Auf einem Trägerkörper 1 mit der Stirnseite 1a und einem im gezeigten Beispiel rechteckigen Querschnitt wird das strangförmige Wickelgut 8, z.B. ein Kupferlackdraht, verlegt werden. Hierzu ist bevorzugt eine Auslassdüse 7 zur Zuführung des Wickelgutes 8 vorgesehen. Der Düse 7 ist ein im gezeigten Beispiel zylindrisches Vorformelement 9 zugeordnet, das parallel zur Längsachse der Düse 7 verfahren werden kann. In der dargestellten Situation wird das Wickelgut 8 gerade um die untere Biegekante 1b des Trägerkörpers 1 gebogen und soll mit einem Abschnitt 8b auf der Seite 1c des Trägerkörpers 1 abgelegt und sodann über die obere Biegekante 1d weiter geführt werden. In der dargestellten Situation wird das Vorformelement 9 so gegen den zugeführten, aus der Düse 7 austretenden Wickelgutstrang 8 gedrückt, dass dieser aus seiner in dessen Längsrichtung gestreckten Lage zwischen der Biegekante 1e und dem Auslass an der Düse 7 definiert ausgelenkt wird. Dabei wird im Strangmaterial eine Biegung erzeugt, die den entsprechenden Strangabschnitt zwischen Biegekante 1e und dem Auslass 7a der Düse 7 in zueinander abgewinkelte Abschnitte 8b und 8a unterteilt. Durch die dabei einwirkende Querkraft erfährt das Wickelgut 8 eine Vorbeanspruchung, die eine spätere Ausbauchung beim Verlegen kompensiert.

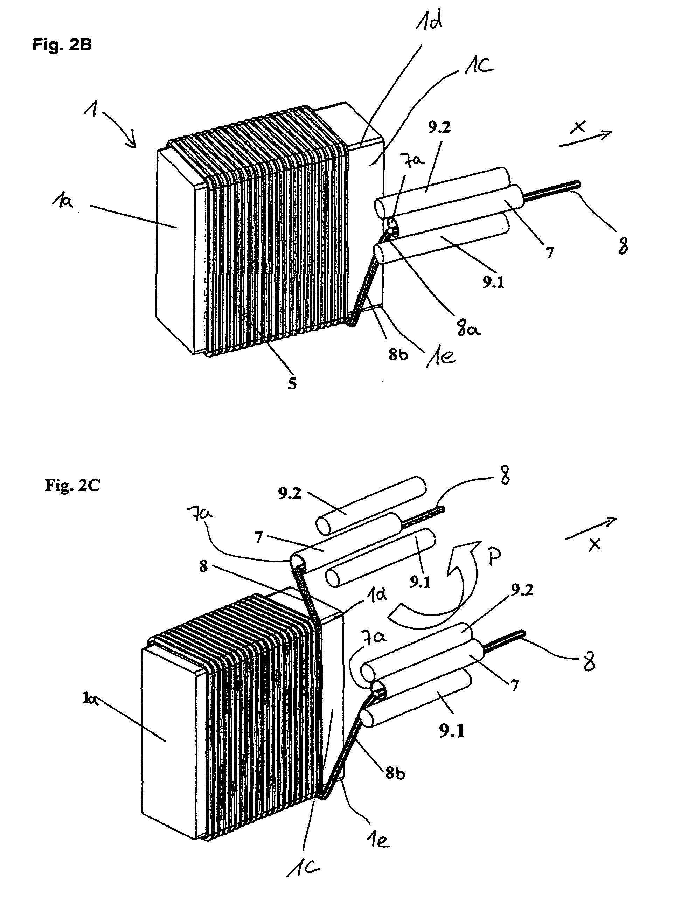

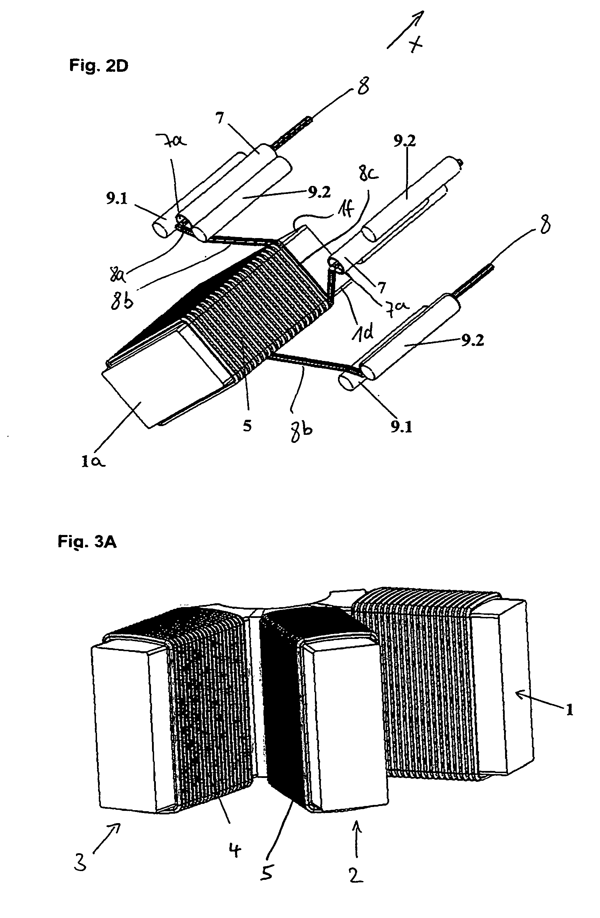

Die Figuren 2B bis 2D zeigen eine besondere Ausführungsform der Erfindung mit beidseits der Düse 7 angeordneten Vorformelementen 9.1, 9.2.Abhängig vom angewendeten Wickelverfahren kann es notwendig sein, der Drahtauslassdüse 7 eine Mehrzahl Vorformelemente 9.1, 9.2 zuzuordnen. Im gezeigten Beispiel sind zwei Vorformelemente 9.1, 9.2 einer Drahtauslassdüse 7 zugeordnet, welche etwa beidseits der Düse 7 positioniert sind. In Figur 2B übernimmt das Vorformelement 9.1 die Auslenkung des Wickelgutes 8 wie oben beschrieben; der entsprechende Abschnitt des Wickelgutes 8 wird dann auf der Seite 1c des Wickelkörpers 1 abgelegt. Vorher wird das nicht verwendete Vorformelement 9.2 in Richtung X parallel zur Düse 7 bewegt, um das Ablegen des Wickelgutes 8 nicht zu behindern. Die Düse 7 fährt anschließend in Richtung des Pfeiles P (der die Wickelrichtung andeutet) weiter um den Wickelkörper 1 herum und legt das Wickelgut 8 dabei um die Biegekante 1d herum (Figur 2C). Dabei werden die Vorformelemente 9.1, 9.2 nicht gebraucht und werden gegenüber der Düse 7 parallel hierzu in Richtung X zurückgefahren, so dass sie das Ablegen des Wickelgutes 8 nicht behindern. Die Gruppe aus Düse 7 und Vorformelementen 9.1, 9.2 fährt hinter der Biegekante 1d an der Schmalseite des Trägerkörpers 1 weiter, um den entsprechenden Abschnitt 8c des Wickelgutes auf der Stirnseite abzulegen. Anschließend überfährt die Düse 7 die hintere Biegekante 1f, zwischen der und der Biegekante 1d der Abschnitt 8c abgelegt wurde. Das Wickelgut 8 wird an der Biegekante 1f erneut umgebogen, um darauf auf der der Seite 1c gegenüberliegenden Seite abgelegt zu werden. An dieser Stelle werden die Vorformelemente 9.1, 9.2 wieder parallel zur Düse nach vorne (Richtung -X) gefahren und der erfindungsgemäße Vorformvorgang wiederholt sich auf der Rückseite, indem das Vorformelement 9.2 eine Auslenkungskraft auf das Wickelgut quer zur Laufrichtung des Wickelgutes 8 ausübt (Figur 2D).

Die in den Figuren 2B bis 2D gezeigte Ausführung des Verfahrens eignet sich insbesondere für das Flyerwickelprinzip. Für andere Wickelverfahren können ggf. eine andere Anzahl von Vorformelementen eingesetzt werden.

Mit der Erfindung lassen sich verschiedene Trägerkörperkonstellationen bewickeln. Beispielhaft zeigt Figur 3A eine Gruppe von drei außen genuteten Trägerkörpern 1 - ähnlich wie in Figur 1. Dabei ist erkennbar, dass die Bauchigkeit der Wicklungen insbesondere im Bereich der Längsseiten vermieden worden ist. Die Spulen 4 und 5 stoßen im hinteren Bereich nicht mehr aneinander und es verbleibt ein ausreichender Abstand.

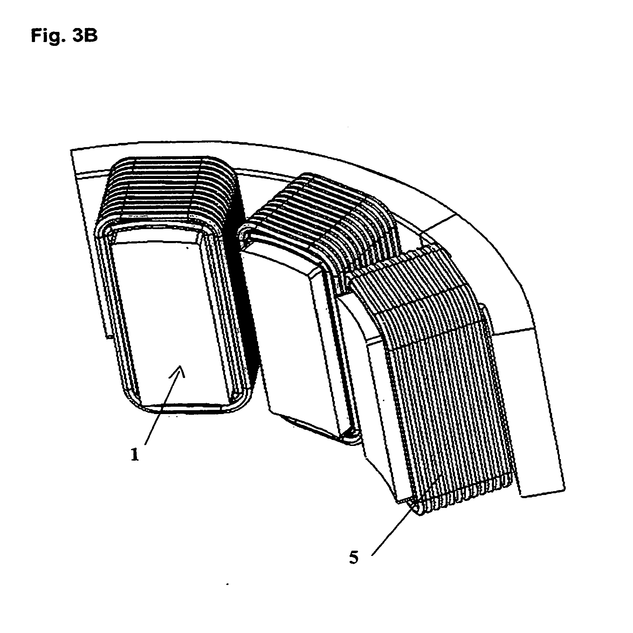

Gleiches lässt sich erfindungsgemäß, wie Figur 3B verdeutlicht, an einer Gruppe von drei innen genuteten Trägerkörpern 1 erreichen.

## Patentansprüche

1. Wickelverfahren, insbesondere zur Ausbildung von elektrischen Spulen, bei welchem ein aus einer Zuführeinrichtung (7) zugeführtes strangförmiges Wickelgut (8) auf einen Trägerkörper (1) mit nicht kreisrundem Querschnitt durch relatives Bewegen von Wickelgut (8) und Trägerkörper aufgewickelt wird, wobei auf das Wickelgut (8) vor dem Ablegen auf der zu bewickelnden Oberfläche eine Kraft quer zu dessen Längserstreckung ausgeübt wird, **dadurch gekennzeichnet,**
**dass** die Querkraft auf das Wickelgut (8) eine elastische bis plastische Vorbeanspruchung ausübt, die das Verhalten des Wickelguts (8) beim Auftreffen auf den Trägerkörper (1) und bei der fortschreitenden Windungsausbildung derart nachhaltig beeinflusst, so dass das Bestreben des verlegten Drahtes, zwischen Biegepunkten Ausbauchungen (6) zu bilden, ganz oder ausreichend teilweise kompensiert wird, wobei die Querkraft zyklisch aktiviert wird, indem mindestens ein relativ zur Zuführeinrichtung (7) bewegliches Vorformelement (9; 9.1, 9.2) in Eingriff mit dem Wickelgutstrang gebracht wird.

2. Wickelverfahren nach Anspruch 1,
**dadurch gekennzeichnet,**
**dass** die auf das Wickelgut (8) ausgeübte Kraft wenigstens eine Kraftkomponente quer zur Ablegerichtung des auf der zur bewickelnden Oberfläche abzulegenden Wickelgutes (8) aufweist.

3. Wickelverfahren nach Anspruch 1 oder 2,
**dadurch gekennzeichnet,**
**dass** die auf das Wickelgut (8) ausgeübte Kraft wenigstens eine in Richtung des Trägerkörpers weisende Kraftkomponente aufweist.

4. Wickelverfahren nach Anspruch 1,
**dadurch gekennzeichnet,**
**dass** es sich bei dem strangförmigen Wickelgut (8) um draht-, litzen- oder seilförmigen elektrische Leiter handelt.

5. Wickelverfahren nach einem der Ansprüche 1 bis 4,
**dadurch gekennzeichnet,**
**dass** es sich bei dem Trägerkörper um ein Bauteil von Elektromotoren, insbesondere Innen- oder Außenpol-Statoren, handelt.

6. Wickelverfahren nach einem der Ansprüche 1 bis 5,
**dadurch gekennzeichnet,**
**dass** zur Relativbewegung zwischen Trägerkörper und Wickelgut (8) das Rotationswickeln mit stationärer Verlegedüse, das Flyerwickeln mit rotierender Verlegedüse oder das Hub-Schwenk-Wickeln mit einer bahngeführten Düse eingesetzt wird.

7. Vorrichtung zur Ausführung des Wickelverfahrens, insbesondere nach einem der vorherigen Ansprüche, mit einer das Wickelgut (8) zuführenden Zuführeinrichtung (7) und einer Aufnahme zur Befestigung es zu bewickelnden Trägerkörpers (1) wobei Zuführeinrichtung (7) und Trägerkörper (1) relativ zueinander beweglich ausgebildet sind, wobei mindestens ein relativ zur Zuführeinrichtung (7) bewegliches Vorformelement (9; 9.1, 9.2) vorgesehen und zwischen einer Ruhestellung und einer Eingriffsstellung beweglich ist,
**dadurch gekennzeichnet,**
**dass** das Vorformelement (9; 9.1, 9.2) in seiner Eingriffsstellung in der Lage ist, eine Querkraft auf das Wickelgut (8) und dadurch eine elastische bis plastische Vorbeanspruchung auszuüben, die das Verhalten des Wickelguts (8) beim Auftreffen auf den Trägerkörper (1) und bei der fortschreitenden Windungsausbildung derart nachhaltig beeinflusst, so dass das Bestreben des verlegten Drahtes, zwischen Biegepunkten Ausbauchungen (6) zu bilden, ganz oder ausreichend teilweise kompensiert wird.

8. Vorrichtung nach Anspruch 7,
**dadurch gekennzeichnet,**
**dass** das Vorformelement (9) ein Halte- und Führungsteil aufweist, welches mit einem Aktuator lösbar verbunden ist.

9. Vorrichtung nach Anspruch 7 und 8,
**dadurch gekennzeichnet,**
**dass** die Zuführeinrichtung (7) und das/die ihr zugeordnete/n Vorformelement/e (9; 9,1 , 9.2) als Einheit ausgebildet sind.

10. Vorrichtung nach einem der Ansprüche 7 bis 9,
**dadurch gekennzeichnet,**
**dass** die Vorformelemente (9.1, 9.2) im Wesentlichen in einer zur Längsachse (X) der Zuführeinrichtung (7) parallelen Ebene und/oder in dieser Ebene auch mit zueinander parallelen Achsen angeordnet sind.

11. Vorrichtung nach einem der Ansprüche 7 bis 10,
**dadurch gekennzeichnet,**
**dass** die Zuführeinrichtung (7) schwenkbar ausgebildet ist.

## Claims

1. Winding method, in particular to form electrical coils, wherein a strand-form winding material (8) fed from a feed unit (7) is wound onto a support body (1) with non-circular cross-section through relative movement of the winding material (8) and support body, wherein a force transverse to the longitudinal extension of the winding material (8) is exerted on said winding material (8) before laying on the surface to be wound,
**characterised in that**
the transverse force exerts an elastic to plastic pre-stressing on the winding material (8) which lastingly influences the behaviour of the winding material (8) upon contact with the support body (1) and in the continuing winding formation in such a way that the effort of the laid wire to form bulges (6) between bend points is completely or sufficiently partially compensated, wherein the transverse force is cyclically activated by bringing at least one pre-form element (9; 9.1, 9.2) movable relative to the feed unit (7) into engagement with the winding material strand.

2. Winding method according to claim 1,
**characterised in that**
the force exerted on the winding material (8) has at least a force component transverse to the laying direction of the winding material (8) to be laid on the winding surface.

3. Winding method according to claim 1 or 2,
**characterised in that**
the force exerted on the winding material (8) has at least a force component pointing in the direction of the support body.

4. Winding method according to claim 1,
**characterised in that**
the strand-form winding material (8) is a wire-form, braidform or cable-form conductor.

5. Winding method according to one of the claims 1 to 4,
**characterised in that**
the carrier body is a component of electric motors, in particular internal or external pole stators.

6. Winding method according to one of the claims 1 to 5,
**characterised in that**
for the relative movement between support body and winding material (8) rotation winding with stationary laying element, flyer winding with rotating laying element or lift-pivot winding with a rail-guided laying element is used.

7. Device for carrying out the winding method, in particular according to one of the preceding claims, with a feed unit (7) feeding the winding material (8) and a mount for fixing the support body (1) to be wound around, wherein the feed unit (7) and support body (1) are formed to be movable relative to each other, wherein at least one pre-form element (9, 9.1, 9.2) which can be moved relative to the feed unit (7) is provided and can be moved between a rest position and an engagement position,
**characterised in that**
the pre-form element (9; 9.1, 9.2) in its engagement position is in a position to exert a transverse force on the winding material (8) and thereby to exert an elastic to plastic pre-stressing which lastingly influences the behaviour of the winding material (8) upon contact with the support body (1) and in continuing winding formation in such a way that the effort of the laid wire to form bulges (6) between bend points is completely or sufficiently partially compensated.

8. Device according to claim 7,
**characterised in that**
the pre-form element (9) comprises a holding and guiding part which is releasably connected to an actuator.

9. Device according to claim 7 and 8,
**characterised in that**
the feed unit (7) and the pre-form element(s) (9; 9.1, 9.2) assigned thereto are formed as one unit.

10. Device according to one of the claims 7 to 9,
**characterised in that**
the pre-form elements (9.1, 9.2) are arranged substantially in a plane parallel to the longitudinal axis (X) of the feed unit (7) and / or in this plane also with axes parallel to each other.

11. Device according to one of the claims 7 to 10,
**characterised in that**
the feed unit (7) is formed pivotably.

## Revendications

1. Procédé de bobinage, en particulier pour former des bobines électriques, dans lequel un produit à bobiner (8) en forme de faisceau, amené par un dispositif d'alimentation (7), est bobiné sur un corps de support (1) de section transversale non circulaire, par mouvement relatif du produit à bobiner (8) et du corps de support, sachant qu'une force est appliquée sur le produit à bobiner (8), perpendiculairement à sa dimension longitudinale, avant sa mise en place sur la surface à bobiner,
**caractérisé en ce que**
la force transversale, appliquée sur le produit à bobiner (8), exerce une précontrainte allant d'élastique à plastique, qui influence durablement le comportement du produit à bobiner (8), lorsqu'il entre en contact avec le corps de support (1) et lors de la progression de la formation de la spire, de sorte que la tendance du fil déposé à former des renflements (6) entre les points de flexion est compensée, complètement ou suffisamment partiellement, sachant que la force transversale est activée cycliquement du fait qu'au moins un élément de préformage (9; 9.1, 9.2), mobile par rapport au dispositif d'alimentation (7), est mis en prise avec le faisceau de produit à bobiner.

2. Procédé de bobinage selon la revendication 1,
**caractérisé en ce que**
la force, appliquée sur le produit à bobiner (8), présente au moins une composante de force perpendiculaire à la direction, dans laquelle le produit à bobiner (8) est déposé sur la surface de bobinage.

3. Procédé de bobinage selon revendication 1 ou 2,
**caractérisé en ce que**
la force appliquée sur le produit à bobiner (8) présente au moins une composante de force, qui est dirigée dans la direction du corps de support.

4. Procédé de bobinage selon la revendication 1,
**caractérisé en ce que**
le produit à bobiner (8) en forme de faisceau est un conducteur électrique en forme de fil, de tresse ou de câble.

5. Procédé de bobinage selon l'une des revendications 1 à 4,
**caractérisé en ce que**
le corps de support est un composant de moteurs électriques, en particulier de stators à pôles intérieurs ou extérieurs.

6. Procédé de bobinage selon l'une des revendications 1 à 5,
**caractérisé en ce que**,
pour le mouvement relatif entre le corps de support et le produit à bobiner (8), il met en oeuvre le bobinage en rotation avec buse stationnaire, le bobinage à ailettes avec buse rotative ou le bobinage à mouvement combiné levée-pivotement avec buse guidée le long d'une voie.

7. Dispositif pour l'exécution du procédé de bobinage, en particulier selon l'une des revendications précédentes, avec un dispositif d'alimentation (7), amenant le produit à bobiner (8), et avec un réceptacle pour la fixation du corps de support (1) à pouvoir d'un enroulement, sachant que ledit dispositif d'alimentation (7) et le corps de support (1) sont mobiles l'un par rapport à l'autre, au moins un élément de préformage (9; 9.1, 9.2), mobile par rapport au dispositif d'alimentation (7), étant prévu et pouvant se déplacer entre une position de repos et une position d'action,
**caractérisé en ce que**
l'élément de préformage (9; 9.1, 9.2), en position d'action, est en mesure d'appliquer une force transversale sur le produit à bobiner (8) et d'exercer ainsi une précontrainte allant d'élastique, qui influence durablement le comportement du produit à bobiner (8), lorsqu'il entre en contact avec le corps de support (1) et lors de la progression de la formation de la spire, de sorte que la tendance du fil déposé à former des renflements (6) entre les points de flexion est compensée complètement ou suffisamment partiellement.

8. Dispositif selon la revendication 7,
**caractérisé en ce que**
l'élément de préformage (9) présente une pièce de maintien et de guidage, qui est reliée de manière amovible à un actionneur.

9. Dispositif selon les revendications 7 et 8,
**caractérisé en ce que**
le dispositif d'alimentation (7) et le / les élément/s préformé/s (9; 9.1, 9.2) sont réalisés en tant qu'unité.

10. Dispositif selon l'une des revendications 7 à 9,
**caractérisé en ce que**
l'élément de préformage (9.1, 9.2) est essentiellement disposé dans un plan parallèle à l'axe longitudinal (X) du dispositif d'alimentation (7) et / ou également dans ce plan avec axes parallèles les uns aux autres.

11. Dispositif selon l'une des revendications 7 à 10,
**caractérisé en ce que**
le dispositif d'alimentation (7) est de conception pivotante.
